# EUROPEAN PATENT SPECIFICATION

(11) **EP 1 330 814 B1**
(45) Date of publication and mention of the grant of the patent: **15.12.2004**
(21) Application number: 00980088.9
(22) Date of filing: 31.10.2000
(51) Int. Cl.: G10K 11/178

(54) **PREVENTING OSCILLATIONS IN FLOW SYSTEMS**
VERHINDERUNG VON OSZILLATIONEN IN STRÖMUNGSSYSTEMEN
PREVENTION DES OSCILLATIONS DANS DES SYSTEMES DE FLUCTUATION

(43) Date of publication of application: 30.07.2003
(73) Proprietor: Nederlandse Organisatie voor toegepast-natuurwetenschappelijk Onderzoek TNO, 2628 VK Delft (NL)
(72) Inventor: DOELMAN, Niek, NL-2628 VK Delft (NL); PARCHEN, René, NL-2628 VK Delft (NL)
(74) Representative: Prins, Adrianus Willem, Mr. Ir.
(86) International application number: PCT/NL2000/000782
(87) International publication number: WO 2002/037468

(56) References cited:
- EP-A- 0 824 255
- EP-A- 0 837 452
- US-A- 4 677 676
- US-A- 5 377 275
- US-A- 5 966 452

## Description

### Field of the invention

The present invention relates to an arrangement of acoustic noise reduction equipment comprising an electronic controller, at least one acoustic sensor and an acoustic output device, the electronic controller being arranged to reduce oscillations in a flow system due to an acoustic source which generates an acoustic wave field consisting of acoustic waves p+ travelling away from the acoustic source and reflected acoustic waves p- generated by reflection of said acoustic waves p+ and travelling towards the acoustic source.

### Prior Art

In flow systems for a gaseous medium, transport of a gas occurs through a confined space separated from the surrounding environment. Often, the gas flow is combined with a combustion process in which a heat flow is created. In such closed combustion systems, the state of the flows is known to be inherently unstable. Fluctuations in one flow may influence the other flow, for example, the gas flow may cause a fluctuation in the heat flow, which will locally change the density of the gas causing again a fluctuation in the gas flow. This phenomenon may be self-amplifying, and may cause an acoustic source in the system due to resonance between the fluctuations in gas flow and heat flow. Occurrence of acoustic resonance is, for example, well illustrated by a system called Rijke tube as is well known to persons skilled in the art. In the tube, a gas flow passes through a heated grid. Because of fluctuations of gas flow and heat flow, a sound at a certain frequency is generated in the tube.

Oscillations in flow systems are not limited to systems in which flows of gas and heat are combined. For example, piping systems with high (turbulent) gas flows may also show acoustic oscillations, due to coupling between the gas flow and an acoustic resonance.

An effect in closed flow systems, in addition to sound generation through acoustic resonance is the generation of pressure variations due to the flow fluctuations. In a closed system which is in acoustic resonance, the performance of the system may be strongly reduced, because of the pressure variations in the system. Moreover, failure of a system can occur by mechanical damage due to pressure oscillations.

Arrangements of acoustic noise reduction systems from the prior art, are described, for example, in a paper by K.R. McManus et al. entitled "A review of active control of combustion instabilities", in Progress in Energy and Combustion Science, Vol.19, pp. 1-30, 1993. Another overview describing the prior art is a paper of G.Billoud et al., "Adaptive active control of combustion instabilities", Combustion Science and Technology, Vol. 18, pp. 257-283, 1992.

In the prior art, oscillations in a flow system are usually prevented by passive control through hardware design and modification of flow systems. However, due to the inherent instability of these systems, these precautions are only effective in a narrow range of well-defined conditions of gas flow, gas temperature, and pressure. In a high efficiency combustion system in heating installations, for example, the gas flow (and the heat flow) are usually modulated as a function of the required heat output Here, the modulated gas flow may change the acoustic properties of the system disadvantageously. Similarly, variables as inlet gas temperature and gas composition may influence the acoustic properties as well.

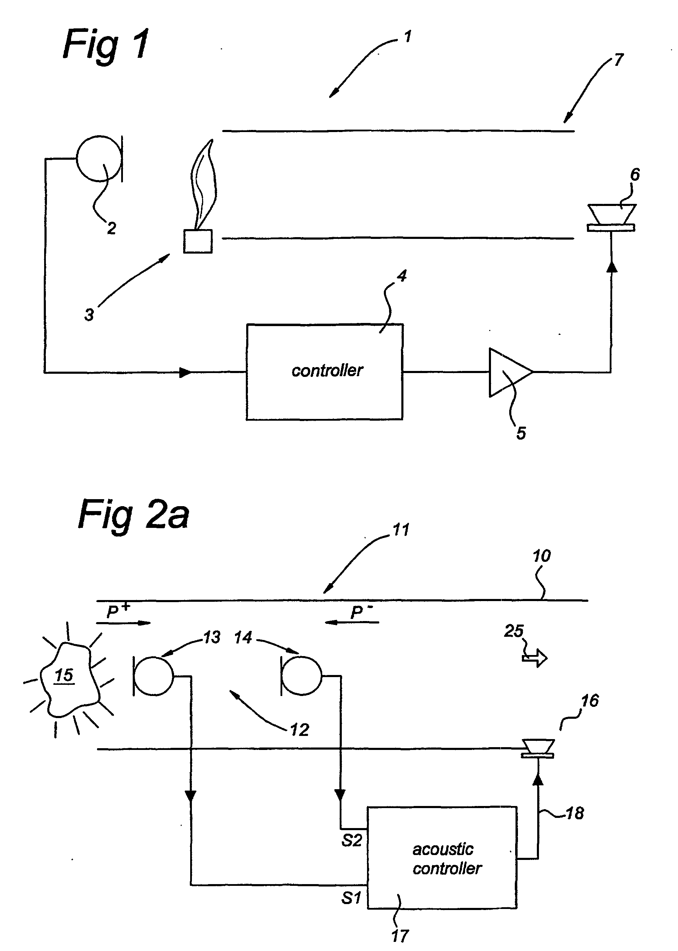

From the prior art also several active control methods to reduce the noise production, are known. Advantageously, active control methods allow for the reduction of oscillations in flow systems working under time-dependent conditions. Active acoustic noise reduction systems are used to reduce oscillations, in which the noise originated by the complete system is controlled as illustrated by the example of a combustion system as schematically shown in figure 1. In such an embodiment, the noise of the complete combustion system 1 is measured by a sensor 2, placed on one side of a burner element 3. The sensor may be an acoustic sensor like a microphone, or, as shown by Billoud in the case of combustion systems, a microphone combined with an optical sensor. The received signal(s) is (are) processed by a controller 4 which outputs a correction signal to an amplifier 5 connected to a loudspeaker 6 placed on a duct 7 on the other side of the burner element 3, opposite to the location of the sensor 2. The acoustic wave generated by the amplifier from the correction signal has such characteristics of amplitude and phase that it will reduce the noise generated by the complete combustion system 1. However, control in this set-up is difficult due to the non-linear acoustic properties of the burner element 3. In an alternative embodiment, in stead of using an acoustic correction signal, the controller controls the noise output of the system by actively perturbing the gas composition or gas flow used in the burner element 3. Still, the non-linear acoustic properties of the burner 3 complicate the control of noise reduction.

Adaptive active control is known from the prior art as described e.g. by the paper of G. Billoud et al. In adaptive active control arrangements, a signal from a sensor monitoring a combustion process is used as input in an adaptive filter. Subsequently, the adaptive filter outputs a correction signal to an actuator that controls the combustion process in order to optimise the process and for example, to reduce flow oscillations.

Also known from the prior art, are methods to reduce oscillations in flow systems by an increase of the flow resistance. Disadvantageously, in combustion systems this step reduces the combustion efficiency of the system. Obviously, in systems for gas distribution and gas transport an increase of the flow resistance is also unfavourable.

### Summary of the invention

It is an object of the present invention to provide an arrangement and a method to prevent noise production and pressure variations produced by an acoustic source originating from fluctuations of the flows in the flow system, without a reduction of the efficiency of the flow system, and also without the need to take into account non-linear acoustic properties of the acoustic source in the flow system.

This object is obtained in an arrangement as defined in the outset, characterised in that:
- the arrangement comprises at least two acoustic sensors;
- the at least two sensors and the acoustic output device being located in an enclosure;
- the at least two acoustic sensors are arranged to be positioned, in use, between the acoustic source and the acoustic output device, and to receive, in use, the acoustic wave field;
- the electronic controller is arranged to carry out the following steps:
   - to receive sensor signals from the at least two sensors,
   - to compute and to generate, in use, a correction signal based on characteristics of the measured sensor signals,
   - to transmit, in use, the correction signal to the output device in order to minimise the reflected acoustic waves p- by the output device.

Moreover, in the arrangement of the present invention, the electronic controller is arranged to determine estimated acoustic waves w+ and estimated reflected acoustic waves w- from the characteristics of the measured sensor signals. Also, the electronic controller comprises an Infinite Impulse Response controller, of which the coefficients are adapted by a stochastic gradient algorithm filter.

Furthermore, in the present invention, the electronic controller is arranged to compute and to generate the correction signal as the output of the adaptive Infinite Impulse Response filter receiving estimated acoustic waves w+ as input, the stochastic gradient algorithm filter receiving the estimated reflected acoustic waves w- as error signal input.

Also, the electronic controller is arranged to use prediction error update rules in the stochastic gradient algorithm filter.

In the arrangement of the present invention the acoustic sensors and the acoustic output device actuator are located at only one side of the acoustic source like e.g., a burner element in a heating system. Advantageously, in such a flow system the arrangement of the present invention strongly simplifies the acoustic resonance reduction control. Only the acoustic wave field at the locations of the acoustic sensors comprising both the acoustic wave p+ and the reflected acoustic wave p- (in summation with the wave generated by the acoustic output device) is monitored.

Moreover, in the arrangement of the present invention the power required to reduce the noise level is relatively low. Therefore, in a preferred embodiment, the arrangement of the present invention can have relatively small dimensions, which allows the (retrofit) installation of the arrangement on small-size high efficiency heating systems for domestic heating in an advantageous manner.

Furthermore, the arrangement of the present invention can advantageously be placed at any desired location in a flow system irrespective of the local flow direction.

The present invention also relates to a method for acoustic noise reduction control comprising the steps of:
- to receive the acoustic wave field by at least two acoustic sensors, positioned between the acoustic source and the acoustic output device;
- to receive by the electronic controller sensor signals from the at least two sensors, and
- to compute and to generate by the electronic controller a correction signal based on characteristics of the measured sensor signals;
- to transmit by the electronic controller the correction signal to the acoustic output device in order to minimise the reflected acoustic waves p- by the acoustic output device.

Moreover, the present invention also relates to a method, including the step of determining estimate acoustic waves w+ and estimated reflected acoustic waves w-from the characteristics of the measured sensor signals.

Further, the present invention relates to a method, including the step of computing the correction signal which is the output of an adaptive Infinite Impulse Response controller, in which the coefficients are adapted by a stochastic gradient algorithm filter.

Also, the present invention relates to a method, including the step of computing and generating the correction signal as the output of the adaptive Infinite Impulse Response filter receiving estimated acoustic waves w+ as input, the stochastic gradient algorithm filter receiving the estimated reflected acoustic waves w- as error signal input.

The present invention also relates to a computer program product to be loaded by the processing means of the arrangement mentioned above, and arranged to provide the aforementioned arrangement with the following capacities:
- to receive the acoustic wave field by at least two acoustic sensors, positioned between the acoustic source and the acoustic output device;
- to receive by the electronic controller sensor signals from the at least two sensors, and
- to compute and to generate by the electronic controller a correction signal based on characteristics of the measured sensor signals;
- to transmit by the electronic controller the correction signal to the acoustic output device in order to minimise the reflected acoustic waves p- by the acoustic output device.

Finally, the invention relates to a data carrier provided with a computer program product as defined above.

### Brief description of the drawings

Figure 1 schematically shows an arrangement of an acoustic noise reduction system for noise reduction in a combustion system as known from the prior art;
Figure 2a shows a schematic overview of an arrangement of an acoustic noise reduction system in accordance with the present invention;
Figure 2b shows a schematic overview of an arrangement of an acoustic signal controller in accordance with the present invention;
Figure 3 shows an arrangement of an acoustic noise reduction system in accordance with the present invention, in which the relations between the flows and the locations of the acoustic sensors are illustrated;
Figure 4 shows a schematic overview of a controller arrangement of the acoustic noise reduction system in accordance with the present invention;
Figure 5 shows exemplary results of a experiment, in which the sound level in a combustion system was measured as a function of time, with and without the application of an acoustic noise reduction system in accordance with the present invention;
Figure 6 shows a schematic overview of a small-size high efficiency combustion system for domestic heating, in which preferred locations for installation of an arrangement of an acoustic noise reduction system in accordance with the present invention are shown.

### Description of preferred embodiment

Below, the invention will be explained with reference to some drawings, which are intended for illustration purposes only and not to limit the scope of protection as defined in the accompanying claims.

Figure 2a shows a schematic overview of an arrangement of an acoustic noise reduction system in accordance with the present invention. In a flow system 11 with walls 10 an acoustic sensor array 12 comprising of at least two sensors 13, 14 is placed between an acoustic source 15 like e.g. a burner element 3, and an acoustic output device 16, which is located in one of the walls 10 of flow system 11. The sensors 13, 14 are connected to an acoustic controller 17, which is connected to the acoustic output device 16. In use, a gas flows through the flow system 11, as indicated by arrow 25. The gas flow may be oppositely directed.

The sensors 13, 14 and the output device 16 are preferably placed in such a way that the gas flow 25 is not substantially obstructed and substantially no increase of the flow resistance occurs.

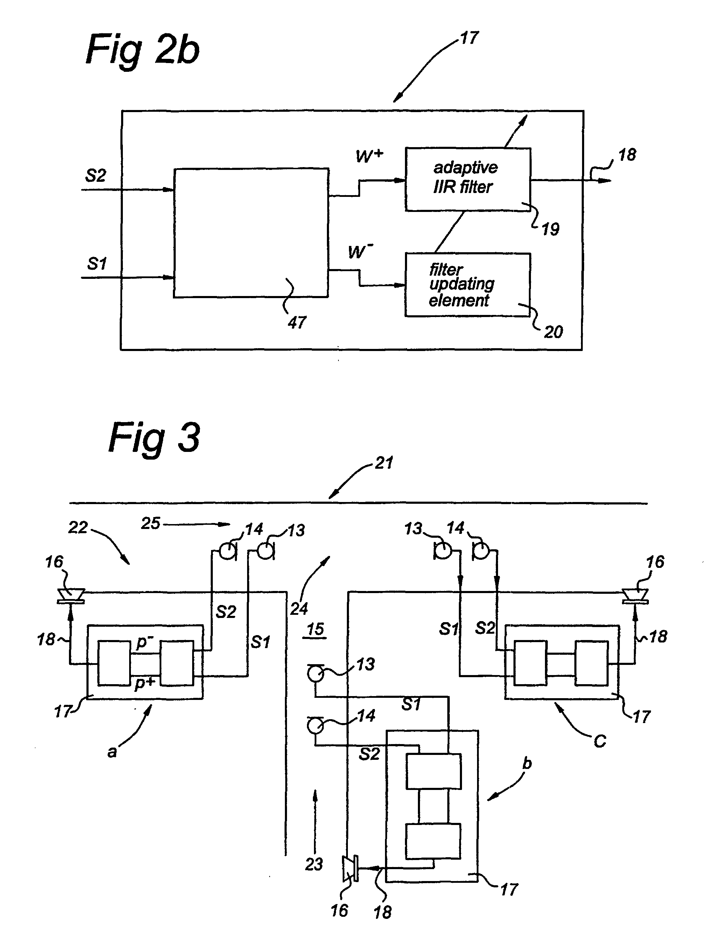

Due to the occurrence of flow fluctuations, the acoustic source 15 generates noise, i.e., acoustic waves propagating through the flow system 11 as denoted in figure 2 by arrow p+. In the flow system the acoustic waves p+ are reflected, thereby creating other acoustic waves, indicated in figure 2 by arrow p-. When the acoustic waves p-interfere with the waves p+ of acoustic source 15 , and due to the relation of their phase the acoustic waves are amplified, acoustic resonance occurs in the flow system.

In the arrangement of the present invention, the acoustic sensors 13, 14 measure the summation of the acoustic pressure p at the respective locations of sensors 13, 14 and produce electrical signals s1 and s2, respectively. The controller 17 processes signals s1 and s2 from the sensor 13, 14. Since the acoustic pressure in the flow system 11 is known at the locations of the sensors 13, 14, the controller 17 is able to compute estimates of the two contributing waves viz. w+ and w-. Using the characteristic values computed for estimated acoustic waves w-, the controller 17 outputs a correction signal 18 to the acoustic output device 16, with such characteristics that the acoustic wave generated by the acoustic output device 16, actively minimises the acoustic waves p-travelling towards the acoustic source 15. To this end, an algorithm is implemented on the controller 17 which adaptively tunes the characteristics of the controller. In this arrangement, the acoustic losses from the system are increased and acoustic resonance is reduced. Advantageously, when the noise level is low, in this arrangement only small power is needed by the acoustic output device 16 to keep the noise level constant.

In the arrangement of the present invention, the sensor array 12 comprising at least two sensors 13, 14 is always positioned between the acoustic source 15 and the acoustic output device 16 that minimises the acoustic waves p-. The sensors 13, 14 are omnidirectional, regarding the collection of information on the acoustic wave field.

This arrangement in which sensors 13, 14 and actuator 16 are located at the same side of an acoustic source 15 like a burner element 3, also simplifies the acoustic resonance reduction control in a flow system 11. In systems known from the prior art, the acoustic source is located in between the sensor and the actuator. In such a set-up the acoustic transfer function from actuator 16 to sensors 13, 14 is influenced by the acoustic source (like a burner element 3) which has highly non-linear and possibly unsteady acoustic properties. As known to those skilled in the art, this arrangement causes the adaptive control to be difficult since the control solution depends on the non-linear and possibly unsteady behaviour of the acoustic source 15. In the arrangement of the present invention, only the area between sensors 13, 14 and actuator 16 is essential and the control solution is not influenced by the behaviour of the acoustic source.

Figure 2b shows a schematic overview of an arrangement of the acoustic signal controller 17 in accordance with the present invention. In the controller 17 controller sensor electronics 47 are connected to an adaptive Infinite Impulse Response (IIR) filter processor means 19 and a filter updating element 20. The signal s1 and s2 are fed to the controller sensor electronics 47, which computes the estimates of the contributing waves viz. w+ and w-. Subsequently, the estimated acoustic waves w+ and the estimated reflected acoustic waves w- are fed to the adaptive MR filter processor means 19. The signal of waves w+ is fed into the IIR filter 19. Through a filter updating element 20, the waves w- control the output correction signal 18 of the IIR filter 19.

In figure 3 a schematic overview of a further embodiment of an acoustic noise reduction system in accordance to the present invention is shown in a branching section of a piping system 21 comprising a main duct 22 and a branching duct 23. In such a system, oscillations can occur due to interference of flow fluctuations between a main duct 22 and a branching duct 23. Then, an acoustic source 15 is located at the beginning of branch 24. The direction of the gas flow is indicated by arrow 25. The acoustic noise reduction system in accordance with the present invention can be located in three different locations: upstream from (position a), downstream from (b) or in the branching duct (c).

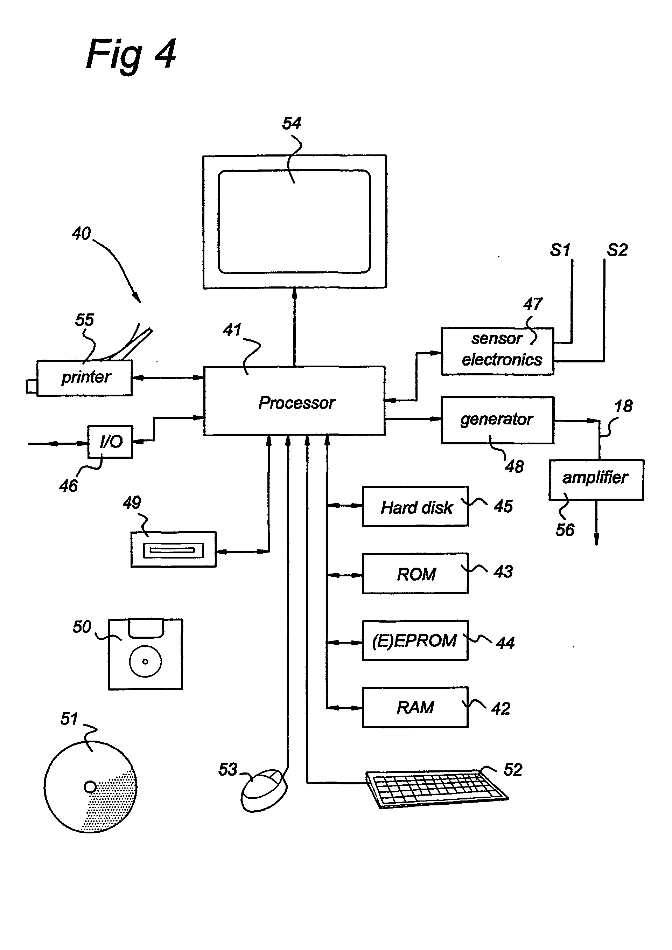

Figure 4 shows a schematic overview of an embodiment of controller arrangement 40 comprising processor means 41 with peripherals. The processor means 41 is connected to memory units 42, 43, 44, 45 which store instructions and data, an I/O connection 46 for network access, controller sensor electronics 47, wave generator 48, amplifier 56, one or more reading units 49 (to read, e.g., floppy disks 50, CD ROM's and/or DVD's 51, etc.), a keyboard 52 and a mouse 53 as input devices, and as output devices, a display 54 and a printer 55.

The memory units shown comprise RAM 42, (E)EPROM 43, ROM 44 and hard disk 45. However, it should be understood that there may be provided more and/or other memory units known to persons skilled in the art. Moreover, one or more of them may be physically located remote from the processor means 41, if required. The processor means 41 are shown as one box, however, they may comprise several processing units functioning in parallel or controlled by one main processor, that may be located remote from one another, as is known to persons skilled in the art. Moreover, other input/output devices (e.g., a touch screen) than those shown (i.e., 51, 52, 53, 54) may be provided.

In this embodiment, analysing the acoustic signals and generating the correction signal are performed by separate processing means: the controller electronics processing means 47 receives the electrical signals s1 and s2 from sensors 13, 14 and computes the characteristics of the estimated acoustic waves w+ and estimated reflected acoustic waves w-. Preferably, the obtained values of wave w+ are used as an input signal to the processing means 47 such that the processing means 47 also functions as the IIR filter 19 in conjunction with the adaptive filter element 20 to produce a correction signal 18. In this way an adaptive feedforward controller is constructed as w+ contains advanced information of w-. Wave generator 48 produces the correction signal 18, which is amplified by amplifier 56 and sent to acoustic output device 16 in order to generate the desired acoustic wave to actively minimise acoustic waves p-. In other embodiments, the functions of controller electronics 47 and wave generator 48 may be combined in a single signal processing unit. Also, the functions of controller electronics 47 and wave generator 48 may be incorporated in the processing means 41.

In a preferred embodiment, the controller 17 possesses the characteristics of an Infinite Impulse Response controller, of which the coefficients are adapted by a stochastic gradient algorithm. To improve the algorithm's performance prediction error update rules are applied. The adaptive control algorithm is based on a procedure for explicit criterion optimisation, described for example, in a paper by N.J. Doelman, "Adaptive and robust systems for the active control of noise and vibration", Proceedings Adaptronic 1999, pp. 72-81, 1999.

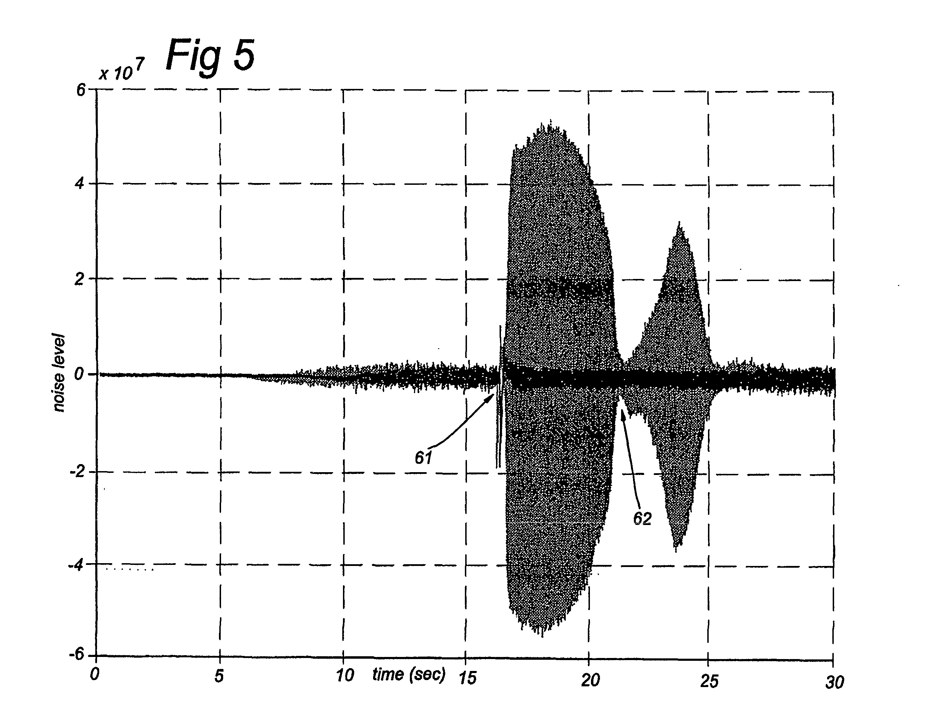

Figure 5 shows exemplary results of an experiment, in which the sound level in a combustion system was measured as a function of time, with and without the application of an acoustic noise reduction system in accordance with the present invention.

In the graph of figure 5 the measured pressure level is plotted as a function of time. The grey line depicts the noise level without the application of the acoustic noise reduction system of the present invention, the black line depicts the noise level when the acoustic noise reduction system is used. In both experiments the gas flow 25 is opened after 17 s and the burner element 3 ignited, as indicated by arrow 61.

As shown by the grey line in the graph of figure 5, without the acoustic noise reduction system a first instability occurs between 17 and 21 s. Due to heating of the combustion system, the instability reduces to a minimum after 21 s (indicated by arrow 62). Between 21 and 25 s, the noise level increases again due to a second instability of the flow system at higher temperature. In this example the instability disappears after 25 s, but as known to persons skilled in the art, oscillations in flow/combustion systems may exist for longer time intervals, even as long as the full time the flow/combustion system is in operation.

With the acoustic noise reduction system, the acoustic oscillations are strongly suppressed: the noise level remains at low level after ignition of the combustion system. Following the black line in the graph, at the opening of the gas flow 25 and the ignition of the burner element 3 after 17 s, only a short transient is shown in the noise level. The signal before and after ignition is mainly produced by the pressure fluctuations at the sensor that are induced by the turbulence in the flow.

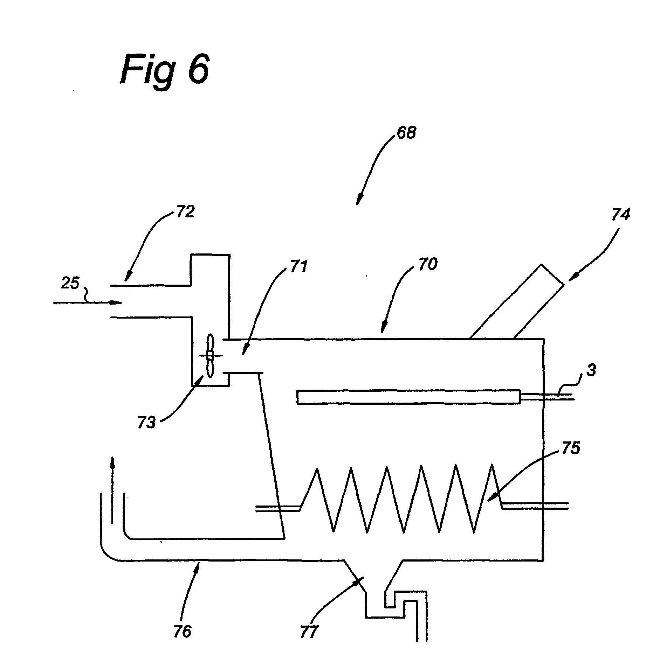

Advantageously, because the electrical power needed by the acoustic output device 16 to produce an acoustic correction signal and to minimise the resonance is low, the size of the acoustic noise reduction system can be relatively small. Hence, an arrangement of the present invention can be easily installed onto a small-size high flow systems. In one preferred embodiment as shown in figure 6, the acoustic noise reduction system may be applied in a small-size high efficiency combustion system for domestic heating 68. In an enclosure 70 a burner element 3 is installed on top of a heat exchanger 75. A fan 73 generates a forced supply of air from an inlet duct 72. Below a heat exchanger 75, a condensation outlet 77 is located to remove water, formed in the combustion process, that precipitated on the heat exchanger 75. Residual gases are removed from the system 68 through an exhaust outlet 76.

In such a system the control system can be placed in one of a number of preferred locations, due to its small size. The control system may be placed at the inlet duct 71, even in the duct 72 before the inlet fan 73. Also an additional tube comprising the sensor array 12 and the output device 16 may be positioned at a location 74 above the burner element 3. Alternatively, the system can be located under the heat exchanger 75, at the outlet duct 76, or at the condensation outlet 77. Since the acoustic noise reduction system actively increases acoustic losses, the noise level in the combustion system can be strongly suppressed.

## Claims

1. Acoustic noise reduction equipment comprising an electronic controller (17), at least one acoustic sensor (13) and an acoustic output device (16), said electronic controller (17) being arranged to reduce oscillations in a flow system (11) due to an acoustic source (15) which generates an acoustic wave field consisting of acoustic waves (p+) travelling away from the acoustic source (15) and reflected acoustic waves (p-) generated by reflection of said acoustic waves (p+) and travelling towards the acoustic source (15) , **characterised in that**
the arrangement comprises at least two acoustic sensors (13, 14);
the at least two sensors (13, 14) and the acoustic output device (16) being located in an enclosure (10);
said at least two acoustic sensors (13, 14) are arranged to be positioned, in use, between said acoustic source (15) and said acoustic output device (16), and to receive, in use, said acoustic wave field;
said electronic controller (17) is arranged to carry out the following steps:
- to receive sensor signals (s1, s2) from said at least two sensors (13, 14),
- to compute and to generate, in use, a correction signal (18) based on characteristics of said measured sensor signals (s1, s2),
- to transmit, in use, said correction signal (18) to said output device (16) in order to minimise said reflected acoustic waves (p-) by said output device (16).

2. Equipment in accordance with claim 1, **characterised in that** said electronic controller (17) determines estimated acoustic waves (w+) and estimated reflected acoustic waves (w-) from said characteristics of said measured sensor signals (s1, s2).

3. Equipment in accordance with claim 1 or 2, **characterised in that** said electronic controller (17) comprises an adaptive Infinite Impulse Response controller (19), having coefficients which are adapted by a stochastic gradient algorithm filter (20).

4. Equipment in accordance with claim 3, **characterised in that** said electronic controller (17) computes and generates said correction signal (18) as the output of said adaptive Infinite Impulse Response filter (19) receiving estimated acoustic waves (w+) as input, said stochastic gradient algorithm filter (20) receiving said estimated reflected acoustic waves (w-) as error signal input.

5. Equipment in accordance with claim 4, **characterised in that** the electronic controller (17) is arranged to use prediction error update rules in the stochastic gradient algorithm filter (20).

6. A method of controlling acoustic noise reduction equipment comprising an electronic controller (17), at least one acoustic sensor (13) and an acoustic output device (16), said electronic controller (17) being arranged to reduce oscillations in a flow system (11) due to an acoustic source (15) which generates an acoustic wave field consisting of acoustic waves (p+) travelling away from the acoustic source (15) and reflected acoustic waves (p-) generated by reflection of said acoustic waves (p+) and travelling towards the acoustic source (15),
**characterised in that** the method carries out the following steps:
- to receive said acoustic wave field by at least two acoustic sensors (13, 14), positioned between said acoustic source (15) and said acoustic output device (16);
- to receive by said electronic controller (17) sensor signals (s1, s2) from said at least two sensors (13, 14), and
- to compute and to generate by said electronic controller (17) a correction signal (18) based on characteristics of said measured sensor signals (s1, s2);
- to transmit by said electronic controller (17) said correction signal (18) to said acoustic output device (16) in order to minimise said reflected acoustic waves (p-) by said acoustic output device (16).

7. A method in accordance with claim 6, **characterised in that** the method includes the step of determining estimate acoustic waves (w+) and estimated reflected acoustic waves (w-) from said characteristics of said measured sensor signals (s1, s2).

8. A method in accordance with claim 6 or 7, **characterised in that** the method includes the step of computing the correction signal (18) which is the output of an adaptive Infinite Impulse Response controller (19), in which the coefficients are adapted by a stochastic gradient algorithm filter (20).

9. A method in accordance with claim 8, **characterised in that** the method includes the step of computing and generating said correction signal (18) as the output of said adaptive Infinite Impulse Response filter (19) receiving estimated acoustic waves (w+) as input, said stochastic gradient algorithm filter (20) receiving said estimated reflected acoustic waves (w-) as error signal input.

10. A method in accordance with claim 9, **characterised in that** the method includes the step of using prediction error update rules in the stochastic gradient algorithm filter (20).

11. An arrangement comprising acoustic noise reduction equipment according to any of the claims 1 - 5 and a flow arrangement in which, due to fluctuations of one or more gaseous flows, in use, an acoustic source (15) is created which generates said acoustic waves (p+).

12. An arrangement in accordance with claim 11, **characterised in that** said arrangement is a combustion system (68).

13. An arrangement in accordance with claim 11, **characterised in that** said arrangement is a piping system (21).

14. A computer program product to be loaded by processing means (41,47) of acoustic noise reduction equipment comprising an electronic controller (17), at least one acoustic sensor (13) and an acoustic output device (16), said electronic controller (17) being arranged to reduce oscillations in a flow system (11) due to an acoustic source (15) which generates an acoustic wave field consisting of acoustic waves (p+) travelling away from the acoustic source (15) and reflected acoustic waves (p-) generated by reflection of said acoustic waves (p+) and travelling towards the acoustic source (15), **characterised in that** said computer program, after being loaded, is arranged to provide said acoustic noise reduction equipment with the following capacities:
- to receive said acoustic wave field by at least two acoustic sensors (13, 14), positioned between said acoustic source (15) and said acoustic output device (16);
- to receive by said electronic controller (17) sensor signals (s1, s2) from said at least two sensors (13, 14), and
- to compute and to generate by said electronic controller (17) a correction signal (18) based on characteristics of said measured sensor signals (s1, s2);
- to transmit by said electronic controller (17) said correction signal (18) to said acoustic output device (16) in order to minimise said reflected acoustic waves (p-) by said acoustic output device (16).

15. A computer program product in accordance with claim 14, **characterised in that** the computer program is arranged to provide said electronic controller (17) with the capability to determine estimated acoustic waves (w+) and estimated reflected acoustic waves (w-) from said characteristics of said measured sensor signals (s1, s2).

16. A computer program product in accordance with claim 14 or 15, **characterised in that** the computer program is arranged to provide said electronic controller (17) with the capability to compute said correction signal (18) as output of an adaptive Infinite Impulse Response controller (19), having coefficients which are adapted by a stochastic gradient algorithm filter (20).

17. A computer program product in accordance with claim 16, **characterised in that** the computer program is arranged to provide said electronic controller (17) with the capability to compute and to generate said correction signal (18) as the output of said adaptive Infinite Impulse Response filter (19) receiving estimated acoustic waves (w+) as input, said stochastic gradient algorithm filter (20) receiving said estimated reflected acoustic waves (w-) as error signal input.

18. A computer program product in accordance with claim 17, **characterised in that** the computer program provides the electronic controller (17) the capability to use prediction error update rules in the stochastic gradient algorithm filter (20).

19. A data carrier provided with a computer program product as claimed in any of the claims 14-18.

## Patentansprüche

1. Vorrichtung zur Reduktion akustischer Schwingungen, die eine elektronische Steuereinrichtung (17), mindestens einen akustischen Sensor (13) und eine akustische Ausgabeeinrichtung (16) aufweist, wobei die elektronische Steuereinrichtung (17) ausgestaltet ist, um Oszillationen in einem Strömungssystem (11) auf Grund einer akustischen Quelle (15) zu reduzieren, die ein akustisches Wellenfeld erzeugt, das aus akustischen Wellen (p+), die von der akustischen Quelle (15) wegwandern, und reflektierten akustischen Wellen (p-) besteht, die durch Reflexion der akustischen Wellen (p+) erzeugt werden und in Richtung der akustischen Quelle (15) wandern, **dadurch gekennzeichnet, daß** die Vorrichtung mindestens zwei akustische Sensoren (13, 14) aufweist,
die mindestens zwei Sensoren (13, 14) und die akustische Ausgabeeinrichtung (16) in einem Gehäuse (10) angeordnet sind,
die mindestens zwei akustischen Sensoren (13, 14) ausgestaltet sind, um im Betrieb zwischen der akustischen Quelle (15) und der akustischen Ausgabeeinrichtung (16) angeordnet zu werden und um im Betrieb das akustische Wellenfeld zu empfangen,
die elektronische Steuereinrichtung (17) ausgestaltet ist, um die folgenden Schritte durchzuführen:
- Empfangen von Sensorsignalen (s1, s2) von den mindestens zwei Sensoren (13, 14),
- im Betrieb Berechnen und Erzeugen eines Korrektursignals (18) auf Basis von Eigenschaften der gemessenen Sensorsignale (s1, s2),
- im Betrieb Übertragen des Korrektursignals (18) an die Ausgabeeinrichtung (16), um die reflektierten akustischen Wellen (p-) durch die Ausgabeeinrichtung (16) zu minimieren.

2. Vorrichtung nach Anspruch 1, **dadurch gekennzeichnet, daß** die elektronische Steuereinrichtung (17) geschätzte akustische Wellen (w+) und geschätzte reflektierte akustische Wellen (w-) aus den Eigenschaften der gemessenen Sensorsignale (s1, s2) bestimmt.

3. Vorrichtung nach Anspruch 1 oder 2, **dadurch gekennzeichnet, daß** die elektronische Steuereinrichtung (17) eine adaptive rekursive Steuereinrichtung (19) ist, die Koeffizienten hat, die durch einen Filter mit stochastischem Gradientenalgorithmus (20) angepaßt werden.

4. Vorrichtung nach Anspruch 3, **dadurch gekennzeichnet, daß** die elektronische Steuereinrichtung (17) das Korrektursignal (18) als den Ausgang des adaptiven rekursiven Filters (19) berechnet und erzeugt, der die geschätzten akustischen Wellen (w+) als Eingang erhält, wobei der Filter mit stochastischem Gradientenalgorithmus (20) die geschätzten reflektierten akustischen Wellen (w-) als Fehlersignaleingang erhält.

5. Vorrichtung nach Anspruch 4, **dadurch gekennzeichnet, daß** die elektronische Steuereinrichtung (17) ausgestaltet ist, um Vorhersagefehler-Aktualisierungsregeln in dem Filter mit stochastischem Gradientenalgorithmus (20) zu verwenden.

6. Verfahren zur Steuerung einer Vorrichtung zur Reduktion akustischer Schwingungen, die eine elektronische Steuereinrichtung (17), mindestens einen akustischen Sensor (13) und eine akustische Ausgabeeinrichtung (16) aufweist, wobei die elektronische Steuereinrichtung (17) ausgestaltet ist, um Oszillationen in einem Strömungssystem (11) auf Grund einer akustischen Quelle (15) zu reduzieren, die ein akustisches Wellenfeld erzeugt, das aus akustischen Wellen (p+), die von der akustischen Quelle (15) wegwandern, und reflektierten akustischen Wellen (p-) besteht, die durch Reflexion der akustischen Wellen (p+) erzeugt werden und in Richtung der akustischen Quelle (15) wandern, **dadurch gekennzeichnet, daß** das Verfahren die folgenden Schritte durchführt:
- Empfangen des akustischen Wellenfeldes durch mindestens zwei akustische Sensoren (13, 14), die zwischen der akustischen Quelle (15) und der akustischen Ausgabeeinrichtung (16) angeordnet sind,
- Empfangen von Sensorsignalen (s1, s2) von den mindestens zwei Sensoren (13, 14) durch die elektronische Steuereinrichtung (17) und
- Berechnen und Erzeugen eines Korrektursignals (18) durch die elektronische Steuereinrichtung (17) auf Basis von Eigenschaften der gemessenen Sensorsignale (s1, s2),
- Übertragen des Korrektursignals (18) durch die elektronische Steuereinrichtung (17) an die akustische Ausgabeeinrichtung (16), um die reflektierten akustischen Wellen (p-) durch die akustische Ausgabeeinrichtung (16) zu minimieren.

7. Verfahren nach Anspruch 6, **dadurch gekennzeichnet, daß** das Verfahren den Schritt des Bestimmens geschätzter akustischer Wellen (w+) und geschätzter reflektierter akustischer Wellen (w-) aus den Eigenschaften der gemessenen Sensorsignale (s1, s2) umfaßt.

8. Verfahren nach Anspruch 6 oder 7, **dadurch gekennzeichnet, daß** das Verfahren den Schritt des Berechnens des Korrektursignals (18) umfaßt, das der Ausgang einer adaptiven rekursiven Steuereinrichtung (19) ist, in der die Koeffizienten durch einen Filter mit stochastischem Gradientenalgorithmus (20) angepaßt werden.

9. Verfahren nach Anspruch 8, **dadurch gekennzeichnet, daß** das Verfahren den Schritt des Berechnens und Erzeugens des Korrektursignals (18) als der Ausgang des adaptiven rekursiven Filters (19) umfaßt, der geschätzte akustische Wellen (w+) als Eingang erhält, wobei der Filter mit stochastischem Gradientenalgorithmus (20) die geschätzten reflektierten akustischen Wellen (w-) als Fehlersignaleingang erhält.

10. Verfahren nach Anspruch 9, **dadurch gekennzeichnet, daß** das Verfahren den Schritt des Verwendens von Vorhersagefehler-Aktualisierungsregeln in dem Filter mit stochastischem Gradientenalgorithmus (20) umfaßt.

11. Anordnung, die eine Vorrichtung zur Reduktion akustischer Schwingungen nach einem der Ansprüche 1 bis 5 und eine Strömungsanordnung aufweist, in der auf Grund von Fluktuationen einer oder mehrerer gasförmiger Strömungen im Betrieb eine akustische Quelle (15) erzeugt wird, die akustische Wellen (p+) erzeugt.

12. Anordnung nach Anspruch 11, **dadurch gekennzeichnet, daß** die Anordnung ein Verbrennungssystem (68) ist.

13. Anordnung nach Anspruch 11, **dadurch gekennzeichnet, daß** die Anordnung ein Leitungssystem (21) ist.

14. Computerprogrammprodukt, das durch Verarbeitungsmittel (41, 47) einer Vorrichtung zur Reduktion akustischer Schwingungen zu laden ist, die eine elektronische Steuereinrichtung (17), mindestens einen akustischen Sensor (13) und eine akustische Ausgabeeinrichtung (16) aufweist, wobei die elektronische Steuereinrichtung (17) ausgestaltet ist, um Oszillationen in einem Strömungssystem (11) auf Grund einer akustischen Quelle (15) zu reduzieren, die ein akustisches Wellenfeld erzeugt, das aus akustischen Wellen (p+), die von der akustischen Quelle (15) wegwandern, und reflektierten akustischen Wellen (p-) besteht, die durch Reflexion der akustischen Wellen (p+) erzeugt werden und in Richtung der akustischen Quelle (15) wandern, **dadurch gekennzeichnet, daß** das Computerprogramm, nachdem es geladen ist, ausgestaltet ist, um die Vorrichtung zur Reduktion akustischer Schwingungen mit den folgenden Fähigkeiten zu versehen:
- das akustische Wellenfeld durch mindestens zwei akustische Sensoren (13, 14) zu empfangen, die zwischen der akustischen Quelle (15) und der akustischen Ausgabeeinrichtung (16) angeordnet sind,
- durch die elektronische Steuereinrichtung (17) Sensorsignale (s1, s2) von den mindestens zwei Sensoren (13, 14) zu empfangen und
- durch die elektronische Steuereinrichtung (17) ein Korrektursignal (18) auf Basis von Eigenschaften der gemessenen Sensorsignale (s1, s2) zu berechnen und zu erzeugen,
- durch die elektronische Steuereinrichtung (17) das Korrektursignal (18) an die akustische Ausgabeeinrichtung (16) zu übertragen, um die reflektierten akustischen Wellen (p-) durch die akustische Ausgabeeinrichtung (16) zu minimieren.

15. Computerprogrammprodukt nach Anspruch 14, **dadurch gekennzeichnet, daß** das Computerprogramm ausgestaltet ist, um die elektronische Steuereinrichtung (17) mit der Fähigkeit zu versehen, geschätzte akustische Wellen (w+) und geschätzte reflektierte akustische Wellen (w-) aus den Eigenschaften der gemessenen Sensorsignale (s1, s2) zu bestimmen.

16. Computerprogrammprodukt nach Anspruch 14 oder 15, **dadurch gekennzeichnet, daß** das Computerprogramm ausgestaltet ist, um die elektronische Steuereinrichtung (17) mit der Fähigkeit zu versehen, das Korrektursignal (18) als Ausgang einer adaptiven rekursiven Steuereinrichtung (19) zu berechnen, die Koeffizienten hat, die durch einen Filter mit stochastischem Gradientenalgorithmus (20) angepaßt werden.

17. Computerprogrammprodukt nach Anspruch 16, **dadurch gekennzeichnet, daß** das Computerprogramm ausgestaltet ist, um die elektronische Steuereinrichtung (17) mit der Fähigkeit zu versehen, das Korrektursignal (18) als den Ausgang des adaptiven rekursiven Filters (19) zu berechnen und zu erzeugen, der geschätzte akustische Wellen (w+) als Eingang erhält, wobei der Filter mit stochastischem Gradientenalgorithmus (20) die geschätzten reflektierten akustischen Wellen (w-) als Fehlersignaleingang erhält.

18. Computerprogrammprodukt nach Anspruch 17, **dadurch gekennzeichnet, daß** das Computerprogramm die elektronische Steuereinrichtung (17) mit der Fähigkeit versieht, Vorhersagefehler-Aktualisierungsregeln in dem Filter mit stochastischem Gradientenalgorithmus (20) zu verwenden.

19. Datenträger, der mit einem Computerprogrammprodukt nach einem der Ansprüche 14 bis 18 versehen ist.

## Revendications

1. Equipement de réduction de bruit acoustique comportant un contrôleur électronique (17), au moins un détecteur acoustique (13) et un dispositif de sortie acoustique (16), ledit contrôleur électronique (17) étant conçu pour réduire les oscillations dans un système d'écoulement (11) dues à une source acoustique (15) qui génère un champ d'onde acoustique constitué d'ondes acoustiques (p+) se déplaçant loin de la source acoustique (15) et d'ondes acoustiques réfléchies (p-) générées par la réflexion desdites ondes acoustiques (p+) et se déplaçant vers la source acoustique (15), **caractérisé en ce que** :
l'agencement comporte au moins deux détecteurs acoustiques (13, 14),
les au moins deux détecteurs (13, 14) et le dispositif de sortie acoustique (16) étant situés dans un boîtier (10),
lesdits au moins deux détecteurs acoustiques (13, 14) sont conçus pour être positionnés, en cours d'utilisation, entre ladite source acoustique (15) et ledit dispositif de sortie acoustique (16), et pour recevoir, en cours d'utilisation, ledit champ d'onde acoustique,
ledit contrôleur électronique (17) est conçu pour réaliser les étapes suivantes consistant à :
- recevoir des signaux de détection (s1, s2) en provenance desdits au moins deux détecteurs (13, 14),
- calculer et générer, en utilisation, un signal de correction (18) sur la base des caractéristiques desdits signaux de détection mesurés (s1, s2),
- transmettre, en cours d'utilisation, ledit signal de correction (18) audit dispositif de sortie (16) afin de minimiser lesdites ondes acoustiques réfléchies (p-) par ledit dispositif de sortie (16).

2. Equipement selon la revendication 1, **caractérisé en ce que** ledit contrôleur électronique (17) détermine des ondes acoustiques estimées (w+) et des ondes acoustiques réfléchies estimées (w-) à partir desdites caractéristiques desdits signaux de détection mesurés (s1, s2).

3. Equipement selon la revendication 1 ou 2, **caractérisé en ce que** ledit contrôleur électronique (17) comporte un contrôleur de Réponse Impulsionnelle Infinie adaptatif (19), ayant des coefficients qui sont adaptés par un filtre d'algorithme de gradient stochastique (20).

4. Equipement selon la revendication 3, **caractérisé en ce que** ledit contrôleur électronique (17) calcule et génère ledit signal de correction (18) en tant que sortie dudit filtre à Réponse Impulsionnelle Infinie adaptatif (19) en recevant des ondes acoustiques estimées (w+) en tant qu'entrée, ledit filtre d'algorithme de gradient stochastique (20) recevant lesdites ondes acoustiques réfléchies estimées (w-) en tant qu'entrée de signal d'erreur.

5. Equipement selon la revendication 4, **caractérisé en ce que** le contrôleur électronique (17) est conçu pour utiliser des règles de mise à jour d'erreurs de prédiction dans le filtre d'algorithme de gradient stochastique (20).

6. Procédé pour commander un équipement de réduction de bruit acoustique comportant un contrôleur électronique (17), au moins un détecteur acoustique (13) et un dispositif de sortie acoustique (16), ledit contrôleur électronique (17) étant conçu pour réduire les oscillations dans un système d'écoulement (11) dues à une source acoustique (15) qui génère un champ d'onde acoustique constitué d'ondes acoustiques (p+) se déplaçant loin de la source acoustique (15) et d'ondes acoustiques réfléchies (p-) générées par la réflexion desdites ondes acoustiques (p+) et se déplaçant vers la source acoustique (15),
**caractérisé en ce que** le procédé exécute les étapes suivantes consistant à:
- recevoir ledit champ d'onde acoustique par au moins deux détecteurs acoustiques (13, 14) positionnés entre ladite source acoustique (15) et ledit dispositif de sortie acoustique (16),
- recevoir par ledit contrôleur électronique (17) des signaux de détection (s1, s2) à partir desdits au moins deux détecteurs (13, 14), et
- calculer et générer par ledit contrôleur électronique ( 17) un signal de correction (18) sur la base des caractéristiques desdits signaux de détection mesurés (s1, s2),
- transmettre par ledit contrôleur électronique (17) ledit signal de correction (18) audit dispositif de sortie acoustique (16) afin de minimiser lesdites ondes acoustiques réfléchies (p-) par ledit dispositif de sortie acoustique (16).

7. Procédé selon la revendication 6, **caractérisé en ce que** le procédé inclut l'étape consistant à déterminer des ondes acoustiques estimées (w+) et des ondes acoustiques réfléchies estimées (w-) à partir desdites caractéristiques desdits signaux de détection mesurés (s1, s2).

8. Procédé selon la revendication 6 ou 7, **caractérisé en ce que** le procédé inclut l'étape consistant à calculer le signal de correction (18) qui est la sortie d'un contrôleur à Réponse Impulsionnelle Infinie: adaptatif (19), dans lequel les coefficients sont adaptés par un filtre d'algorithme de gradient stochastique (20).

9. Procédé selon la revendication 8, **caractérisé en ce que** le procédé inclut l'étape consistant à calculer et générer ledit signal de correction (18) en tant que sortie dudit filtre à Réponse Impulsionnelle Infinie adaptatif (19) en recevant des ondes acoustiques estimées (w+) en tant qu'entrée, ledit filtre d'algorithme de gradient stochastique (20) recevant lesdites ondes acoustiques réfléchies estimées (w-) en tant qu'entrée de signal d'erreur.

10. Procédé selon la revendication 9, **caractérisé en ce que** le procédé inclut l'étape consistant à utiliser des règles de mise à jour d'erreurs de prédiction dans le filtre d'algorithme de gradient stochastique (20).

11. Agencement comportant un équipement de réduction de bruit acoustique selon l'une quelconque des revendications 1 à 5 et un agencement d'écoulement dans lequel, du fait de fluctuations d'un ou de plusieurs écoulements gazeux, en cours d'utilisation, une source acoustique (15) est créée, laquelle génère lesdites ondes acoustiques (p+).

12. Agencement selon la revendication 11, **caractérisé en ce que** ledit agencement est un système de combustion (68).

13. Agencement selon la revendication 11, **caractérisé en ce que** ledit agencement est un système de canalisation (21).

14. Produit de programme informatique destiné à être chargé par des moyens de traitement (41, 47) d'un équipement de réduction de bruit acoustique comportant un contrôleur électronique (17), au moins un détecteur acoustique (13) et un dispositif de sortie acoustique (16), ledit contrôleur électronique (17) étant conçu pour réduire les oscillations dans un système d'écoulement (11) dues à une source acoustique (15) qui génère un champ d'onde acoustique constitué d'ondes acoustiques (p+) se déplaçant loin de la source acoustique (15) et d'ondes acoustiques réfléchies (p-) générées par la réflexion desdites ondes acoustiques (p+) et se déplaçant vers la source acoustique (15), **caractérisé en ce que** ledit programme informatique, après chargement, est conçu pour munir ledit équipement de réduction de bruit acoustique des capacités suivantes consistant à :
- recevoir ledit champ d'onde acoustique par au moins deux détecteurs acoustiques (13, 14) positionnés entre ladite source acoustique (15) et ledit dispositif de sortie acoustique (16),
- recevoir par ledit contrôleur électronique (17) des signaux de détection (s1, s2) à partir desdits au moins deux détecteurs (13, 14), et
- calculer et générer par ledit contrôleur électronique (17) un signal de correction (18) sur la base des caractéristiques desdits signaux de détection mesurés (s1, s2),
- transmettre par ledit contrôleur électronique (17) ledit signal de correction (18) audit dispositif de sortie acoustique (16) afin de minimiser lesdites ondes acoustiques réfléchies (p-) par ledit dispositif de sortie acoustique (16).

15. Produit de programme informatique selon la revendication 14, **caractérisé en ce que** le programme informatique est conçu pour munir ledit contrôleur électronique (17) de la capacité de déterminer des ondes acoustiques estimées (w+) et des ondes acoustiques réfléchies estimées (w-) à partir desdites caractéristiques desdits signaux de détection mesurés (s1, s2).

16. Produit de programme informatique selon la revendication 14 ou 15, **caractérisé en ce que** le programme informatique est conçu pour munir ledit contrôleur électronique (17) de la capacité de calculer ledit signal de correction (18) en tant que sortir d'un contrôleur à Réponse Impulsionnelle Infinie adaptatif (19), ayant des coefficients qui sont adaptés par un filtre d'algorithme de gradient stochastique (20).

17. Produit de programme informatique selon la revendication 16, **caractérisé en ce que** le programme informatique est conçu pour munir ledit contrôleur électronique (17) de la capacité de calculer et générer ledit signal de correction (18) en tant que sortie dudit filtre à Réponse Impulsionnelle Infinie adaptatif (19) en recevant des ondes acoustiques estimées (w+) en tant qu'entrée, ledit filtre d'algorithme de gradient stochastique (20) recevant lesdites ondes acoustiques réfléchies estimées (w-) en tant qu'entrée de signal d'erreur.

18. Produit de programme informatique selon la revendication 17, **caractérisé en ce que** le programme informatique fournit au contrôleur électronique (17) la capacité d'utiliser des règles de mise à jour d'erreurs de prédiction dans le filtre d'algorithme de gradient stochastique (20).

19. Porteuse de données munie d'un produit de programme informatique selon l'une quelconque des revendications 14 à 18.
